# EUROPEAN PATENT SPECIFICATION

(11) **EP 4 589 249 B1**
(45) Date of publication and mention of the grant of the patent: **14.10.2026**
(21) Application number: 22958753.0
(22) Date of filing: 13.09.2022
(51) Int. Cl.: G06T 13/40, G06T 17/00

(54) **CONVERSION METHOD, CONVERSION PROGRAM, AND CONVERSION DEVICE**
UMWANDLUNGSVERFAHREN, UMWANDLUNGSPROGRAMM UND UMWANDLUNGSVORRICHTUNG
PROCÉDÉ DE CONVERSION, PROGRAMME DE CONVERSION ET DISPOSITIF DE CONVERSION

(43) Date of publication of application: 23.07.2025
(73) Proprietor: FUJITSU LIMITED, Kawasaki-shi, Kanagawa 211-8588 (JP)
(72) Inventor: SUZUKI, Tatsuya, Kawasaki-shi, Kanagawa 211-8588 (JP)
(74) Representative: Hoffmann Eitle
(86) International application number: PCT/JP2022/034291
(87) International publication number: WO 2024/057423

(56) References cited:
- WO-A1-2009/145071
- CN-A- 109 741 371
- JP-A- 2012 083 955
- JP-A- 2013 132 748
- JP-A- H09 330 424
- RAZZAQ ABDUL ET AL: "Automatic Conversion of Human Mesh into Skeleton Animation by Using Kinect Motion", INTERNATIONAL JOURNAL OF COMPUTER THEORY AND ENGINEERING, vol. 7, no. 6, 1 December 2015 (2015-12-01), pages 482 - 488, XP093099368, ISSN: 1793-8201, DOI: 10.7763/IJCTE.2015.V7.1006
- XU WENBIN ET AL: "Human-robot Interaction Oriented Human-in-the-loop Real-time Motion Imitation on a Humanoid Tri-Co Robot", 2018 3RD INTERNATIONAL CONFERENCE ON ADVANCED ROBOTICS AND MECHATRONICS (ICARM), IEEE, 18 July 2018 (2018-07-18), pages 781 - 786, XP033498048, DOI: 10.1109/ICARM.2018.8610806
- HEGARINI EGA ET AL: "Similarity analysis of motion based on motion capture technology", 2016 INTERNATIONAL CONFERENCE ON INFORMATICS AND COMPUTING (ICIC), IEEE, 28 October 2016 (2016-10-28), pages 389 - 393, XP033086306, DOI: 10.1109/IAC.2016.7905750
- BHOUNSULE PRANAV A. ET AL: "Accurate Task-Space Tracking for Humanoids with Modeling Errors Using Iterative Learning Control", INTERNATIONAL JOURNAL OF HUMANOID ROBOTICS, vol. 14, no. 03, 25 August 2017 (2017-08-25), SG, pages 1750015, XP093392436, ISSN: 0219-8436, Retrieved from the Internet <URL:https://www.researchgate.net/profile/Pranav-Bhounsule/publication/317119062_Accurate_Task-Space_Tracking_for_Humanoids_with_Modeling_Errors_Using_Iterative_Learning_Control/links/5a427aa90f7e9ba868a47993/Accurate-Task-Space-Tracking-for-Humanoids-with-Modeling-Errors-Using-Iterative-Learning-Control> DOI: 10.1142/s0219843617500153

## Description

### TECHNICAL FIELD

The present invention relates to a conversion method and the like.

### BACKGROUND ART

For detection of three-dimensional motion of a person, a three-dimensional (3D) sensing technology has been established that detects 3D skeleton coordinates of a person with accuracy on the order of centimeters (cm) from a plurality of 3D laser sensors. This 3D sensing technology is expected to be applied to a gymnastics scoring support system and to be developed to other sports and other fields. A method using a 3D laser sensor is referred to as a laser method.

In the laser method, a laser beam is irradiated approximately two million times per second, and a depth and information regarding each irradiation point including a target person are obtained based on a travel time (time of flight (ToF)) of the laser beam. Although the laser method may acquire highly accurate depth data, it has a disadvantage that hardware is complex and expensive due to a complex configuration and processing of laser scanning and ToF measurement.

Instead of the laser method, 3D skeleton recognition may be performed by an image method. The image method is a method that acquires red green blue (RGB) data of each pixel by a complementary metal oxide semiconductor (CMOS) imager, in which an inexpensive RGB camera may be used.

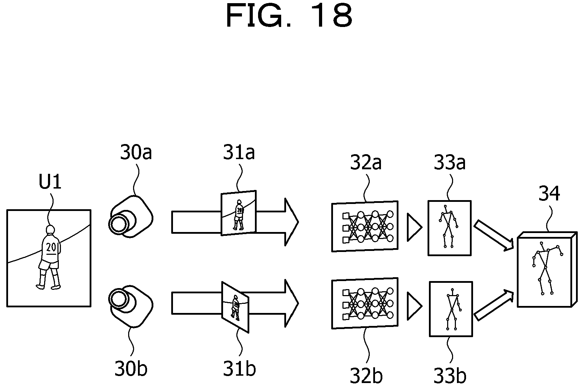

Here, a conventional technology related to 3D skeleton recognition using a plurality of cameras will be described. FIG. 18 is a diagram for describing the conventional technology related to the 3D skeleton recognition. In the example illustrated in FIG. 18, cameras 30a and 30b capture images of a user U1. It is assumed that the images captured by the cameras 30a and 30b are images 31a and 31b, respectively.

The images 31a and 31b are input to training models 32a and 32b, respectively, and the training models 32a and 32b output two-dimensional (2D) key points 33a and 33b, respectively. The training models 32a and 32b are trained deep learning models or the like. The 2D key points 33a and 33b are two-dimensional skeleton information or the like.

In the conventional technology, the 2D key points 33a and 33b are integrated to generate a 3D key point 34. The 3D key points 34 is three-dimensional skeleton information or the like. For example, three-dimensional coordinates of each joint of a human body model are set to the 3D key point 34.

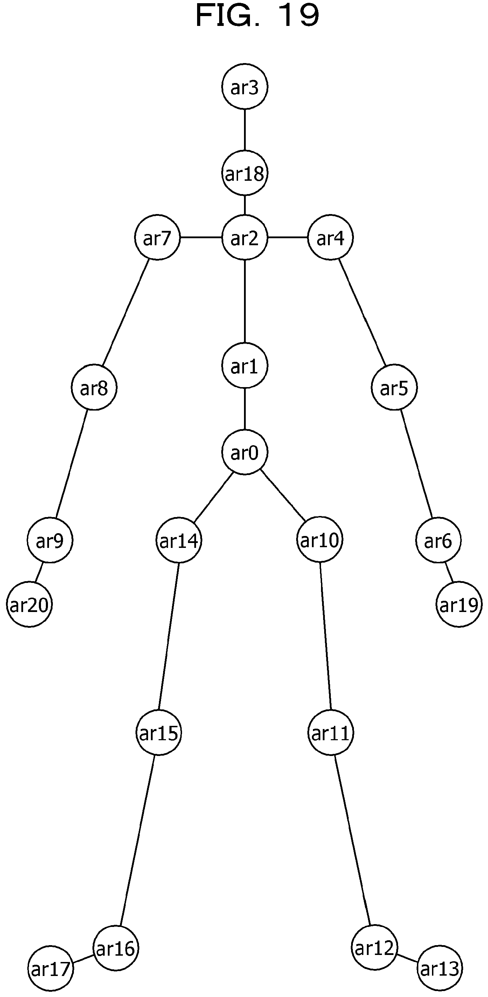

FIG. 19 is a diagram illustrating an example of the human body model. As illustrated in FIG. 19, the human body model is defined by 21 joints ar0 to ar20. In the 3D key point 34, three-dimensional coordinates of x, y, and z are set for each of the joints ar0 to ar20 defined in the human body model.

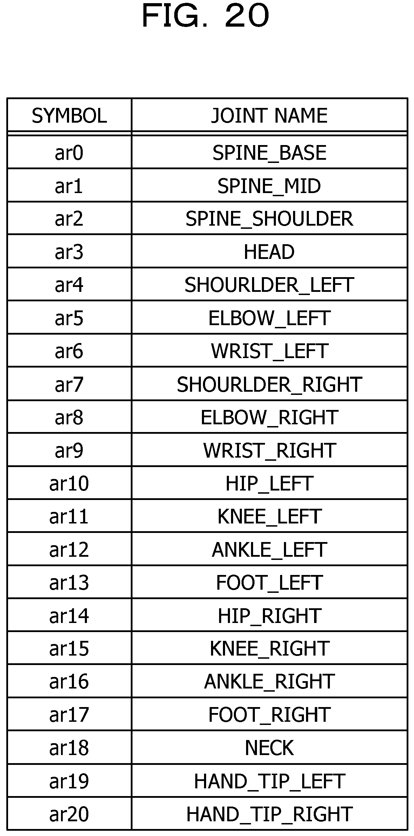

A relationship between each of the joints ar0 to ar20 illustrated in FIG. 19 and a joint name is as illustrated in FIG. 20. FIG. 20 is a diagram illustrating an example of the joint name. For example, the joint name of the joint ar0 is "SPINE_BASE". The joint names of the joints ar1 to a20 are as illustrated in FIG. 20, and description thereof is omitted.

Known solutions are provided by: CN 109 741 371; Razzaq Abdu1 ET AL: "Automatic Conversion of Human Mesh into Skeleton Animation by Using Kinect Motion"; XU WENBIN ET AL: "Human-robot Interaction Oriented Human-in-the-loop Real-time Motion Imitation on a Humanoid Tri-Co Robot" and HEGARINI EGA ET AL: "Similarity analysis of motion based on motion capture technology".

Here, in order to improve performance of skeleton recognition of the image method, there is a method of generating training data of a deep learning model from a 3D key point and performing additional training.

In the conventional technology, it is difficult to directly generate the training data from the 3D key point. Therefore, the 3D key point is once converted into hierarchical structure data, and training data is generated based on such hierarchical structure data. Such hierarchical structure data includes biovision hierarchy (BVH) data.

For example, the BVH data includes two sections, "HIERARCY" and "MOTION". First, in the HIERARCY, a skeleton structure of a human body is defined by a plurality of nodes, and data of a reference posture is included. The plurality of nodes indicating the skeleton structure of the human body includes "ROOT" indicating a node of a reference joint of the human body, "JOINT" indicating a node of a joint, and "End" indicating a node of a distal end portion such as a tip of a hand or foot. In the HIERARCY, a coupling order of nodes from the highest ROOT to the lowest End is defined. To adjacent nodes, a "joint direction vector" is set from a higher node to a lower node.

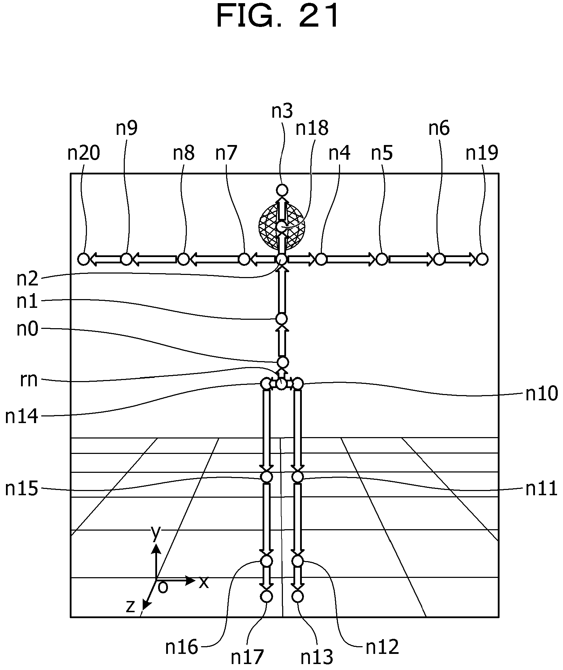

FIG. 21 is a diagram illustrating an example of the reference posture. In the example illustrated in FIG. 21, the reference posture is indicated by nodes rn and n0 to n20. The node rn is the ROOT. The nodes n0 to n2, n4 to n12, n14 to n16, and n18 are the JOINTs. The nodes n3, n13, n17, n19, and n20 are the Ends. The joint direction vector between the respective nodes in the reference posture is defined as "OFFSET".

On the other hand, the total number of frames and a time per frame are set in the MOTION, and information regarding a three-dimensional position of the ROOT, a three-dimensional rotation angle of the ROOT, and a rotation angle of each JOINT is included for each frame.

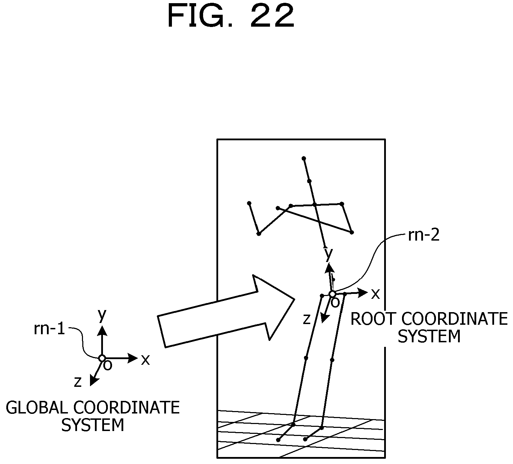

FIG. 22 is a diagram for describing an example of the three-dimensional rotation angle of the ROOT. For example, the three-dimensional rotation angle of the ROOT is an Euler angle (θx, θy, θz) that converts a node rn-1 of the ROOT of a global coordinate system into a node rn-2 of the ROOT of a ROOT coordinate system.

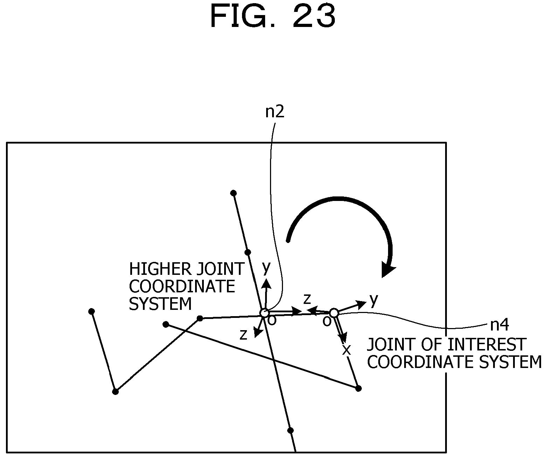

FIG. 23 is a diagram for describing an example of the three-dimensional rotation angle of the JOINT. For example, the three-dimensional rotation angle of the JOINT is an Euler angle (θx, θy, θz) that performs conversion from a higher JOINT coordinate system to a JOINT of interest coordinate system. For example, when it is assumed that the JOINT of interest is the node n4, a higher node of the node n4 is the node n2. In this case, the higher JOINT coordinate system is a coordinate system of the node n2. The JOINT of interest coordinate system is a coordinate system of the node n4.

Here, since the 3D key point is three-dimensional coordinate data and has no information regarding the ROOT and the JOINT, the three-dimensional rotation angle of the ROOT and the three-dimensional rotation angle of each JOINT may not be obtained simply from the 3D key point. For example, in the conventional technology, the three-dimensional rotation angle of the ROOT and the three-dimensional rotation angle of each JOINT are obtained from the 3D key point based on inverse kinematics.

The inverse kinematics is a method of calculating a joint angle for a portion such as a tip of a hand to reach a target position given as an input in an articulated robot such as a manipulator.

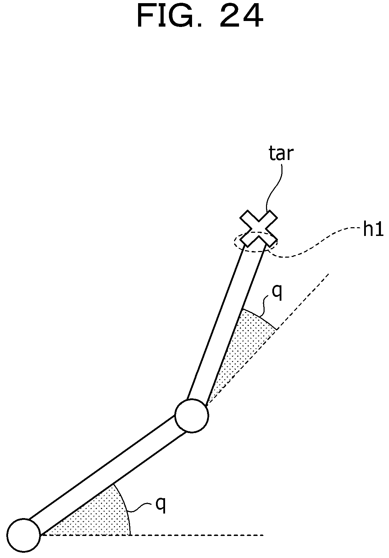

FIG. 24 is a diagram for describing the inverse kinematics. As a representative example, the inverse kinematics by a gradient method will be described. In the example illustrated in FIG. 24, a target position tar is given. In the inverse kinematics, a step of calculating a joint angle q that brings an error e between the target position tar and a position h1 of the tip of the hand close to 0 and repeatedly updating q is repeatedly executed.

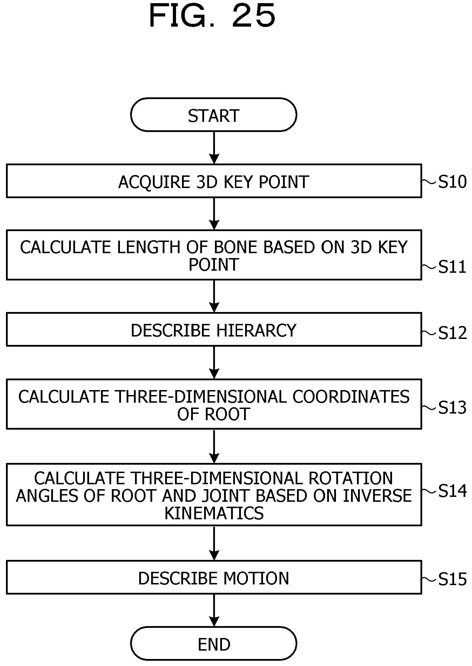

For example, a processing procedure of obtaining the three-dimensional rotation angle of the ROOT and the three-dimensional rotation angle of each JOINT of the BVH data from the 3D key point is a processing procedure illustrated in FIG. 25.

FIG. 25 is a flowchart illustrating the processing procedure of the conventional technology. In FIG. 25, a device that executes processing of the conventional technology will be referred to as a conventional device. As illustrated in FIG. 25, the conventional device acquires a 3D key point (step S10).

The conventional device calculates a length of a bone based on the 3D key point (step S11). The conventional device describes HIERARCY (step S12). The conventional device calculates three-dimensional coordinates of ROOT (step S13).

The conventional device calculates three-dimensional rotation angles of the ROOT and JOINT based on the inverse kinematics (step S14). The conventional device describes MOTION (step S15).

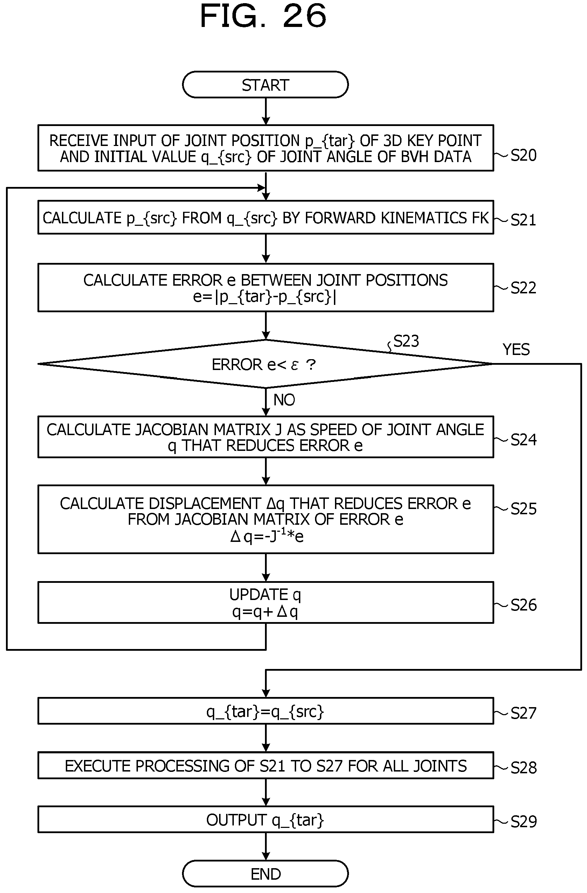

Subsequently, a processing procedure of calculating the three-dimensional rotation angles of the ROOT and the JOINT based on the inverse kinematics described in step S14 of FIG. 25 will be described. FIG. 26 is a flowchart illustrating the processing procedure of calculating the three-dimensional rotation angles of the ROOT and the JOINT based on the inverse kinematics. As illustrated in FIG. 26, the conventional device receives an input of a joint position p_{tar} of the 3D key point and an initial value q_{src} of a joint angle of BVH data (step S20).

The conventional device calculates p_{src} from q_{src} by forward kinematics FK (step S21). The conventional device calculates the error e between the joint positions based on Expression (1) (step S22).$e = \left|p_\left\{tar\right\}-p_\left\{src\right\}\right|$ (1)

In a case where the error e is smaller than ε (step S23, Yes), the conventional device proceeds to step S27. On the other hand, in a case where the error e is not smaller than ε (step S23, No), the conventional device proceeds to step S24.

Processing of Step S24 and subsequent steps will be described. The conventional device calculates a Jacobian matrix J as a speed of the joint angle q (q_{src}) that reduces the error e (step S24).

The conventional device calculates a displacement Δq (Δq_{src}) that reduces the error from the Jacobian matrix J of the error e based on Expression (2) (step S25).$Δq = - {J}^{- 1} e$ (2)

The conventional device updates q based on Expression (3) (step S26), and proceeds to step S21.$q = q + Δq$ (3)

Processing of Step S27 and subsequent steps will be described. The conventional device sets a value of q_{src} to a value of q_{tar} (step S27). The conventional device executes the processing of steps S21 to S27 described above for all joints (step S28). The conventional device outputs q_{tar} (step S29).

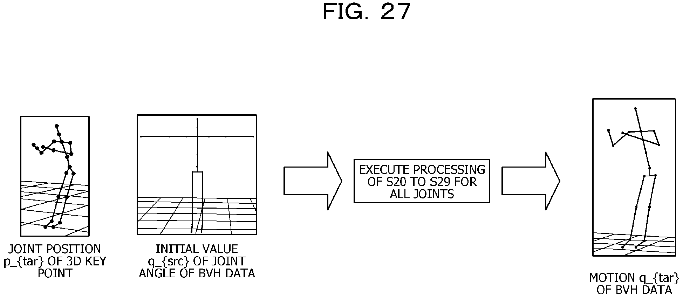

FIG. 27 is a diagram for supplementarily describing the processing of FIG. 26. As illustrated in FIG. 27, when the joint position p_{tar} of the 3D key point and the initial value q_{src} of the joint angle of the BVH data are input and the processing of steps S20 to S29 of FIG. 26 is executed, the motion q_{tar} of the BVH data is output.

### CITATION LIST

### PATENT DOCUMENT

Patent Document 1: Japanese Laid-open Patent Publication No. 2022-92528

### SUMMARY OF INVENTION

### TECHNICAL PROBLEM

However, the conventional technology described above has a problem that a calculation amount is large because the 3D key point is converted into the hierarchical structure data based on the inverse kinematics.

For example, in the processing of the inverse kinematics described with reference to FIG. 26, the processing of steps S21 to S26 is repeatedly executed until the error e becomes smaller than ε.

In one aspect, an object of the present invention is to provide a conversion method, a conversion program, and a conversion device capable of reducing a calculation amount for converting a 3D key point into hierarchical structure data.

### SOLUTION TO PROBLEM

In a first idea, a computer is caused to execute the following processing. The computer acquires skeleton information in which each of a plurality of joints included in a human body and coordinates for the plurality of joints is set, and reference posture information in which each of a plurality of joints included in a human body and reference coordinates for the plurality of joints is set. The computer specifies a second joint that corresponds to a first joint set in the reference posture information from the plurality of joints set in the skeleton information. The computer calculates a relative rotation angle from reference coordinates of the first joint to coordinates of the second joint, and converts the skeleton information into hierarchical structure data by setting the relative rotation angle to the hierarchical structure data.

### ADVANTAGEOUS EFFECTS OF INVENTION

It is possible to reduce a calculation amount for converting a 3D key point into hierarchical structure data.

### BRIEF DESCRIPTION OF DRAWINGS

FIG. 1 is a diagram for describing processing of calculating a three-dimensional rotation angle of ROOT by rigid registration.
FIG. 2 is a diagram (1) for describing processing of calculating a three-dimensional rotation angle of JOINT by a Rodrigues' rotation formula.
FIG. 3 is a diagram (2) for describing the processing of calculating the three-dimensional rotation angle of the JOINT by the Rodrigues' rotation formula.
FIG. 4 is a functional block diagram illustrating a configuration of a conversion device according to the present embodiment.
FIG. 5 is a diagram illustrating an example of a data structure of a three-dimensional (3D) key point table.
FIG. 6 is a diagram for describing an example of a data structure of hierarchical structure data.
FIG. 7 is a diagram illustrating an example of a data structure of biovision hierarchy (BVH) data.
FIG. 8 is a diagram illustrating an example of model data.
FIG. 9 is a diagram illustrating an example of a data structure of a correction angle dictionary.
FIG. 10 is a diagram for describing processing of a correction execution unit.
FIG. 11 is a diagram for describing processing of a generation unit.
FIG. 12 is a flowchart illustrating a processing procedure of the conversion device according to the present embodiment.
FIG. 13 is a flowchart illustrating a processing procedure of first calculation processing.
FIG. 14 is a flowchart illustrating a processing procedure of second calculation processing.
FIG. 15 is a flowchart illustrating a processing procedure of correction processing.
FIG. 16 is a diagram for describing effects of the conversion device according to the present embodiment.
FIG. 17 is a diagram illustrating an example of a hardware configuration of a computer that implements functions similar to those of the conversion device of the embodiment.
FIG. 18 is a diagram for describing a conventional technology related to 3D skeleton recognition.
FIG. 19 is a diagram illustrating an example of a human body model.
FIG. 20 is a diagram illustrating an example of a joint name.
FIG. 21 is a diagram illustrating an example of a reference posture.
FIG. 22 is a diagram for describing an example of the three-dimensional rotation angle of the ROOT.
FIG. 23 is a diagram for describing an example of the three-dimensional rotation angle of the JOINT.
FIG. 24 is a diagram for describing inverse kinematics.
FIG. 25 is a flowchart illustrating a processing procedure of the conventional technology.
FIG. 26 is a flowchart illustrating a processing procedure of calculating the three-dimensional rotation angles of the ROOT and the JOINT based on the inverse kinematics.
FIG. 27 is a diagram for supplementarily describing processing of FIG. 26.

### DESCRIPTION OF EMBODIMENTS

Hereinafter, an embodiment of a conversion method, a conversion program, and a conversion device disclosed in the present application will be described in detail with reference to the drawings. The invention is defined by the appended claims.

### [Embodiment]

Processing of a conversion device according to the present embodiment will be described. For the conversion device, attention is focused on the fact that a reference posture of hierarchical structure data is known. Description of the reference posture of the hierarchical structure data is similar to that described with reference to FIG. 21. By calculating a relative rotation angle from the reference posture to a three-dimensional (3D) key point, the conversion device eliminates repetitive calculation when the 3D key point is converted into biovision hierarchy (BVH) data, and reduces a calculation amount.

For example, the conversion device calculates a three-dimensional rotation angle of ROOT by rigid registration. Furthermore, the conversion device calculates a three-dimensional rotation angle of JOINT by a Rodriques' rotation formula.

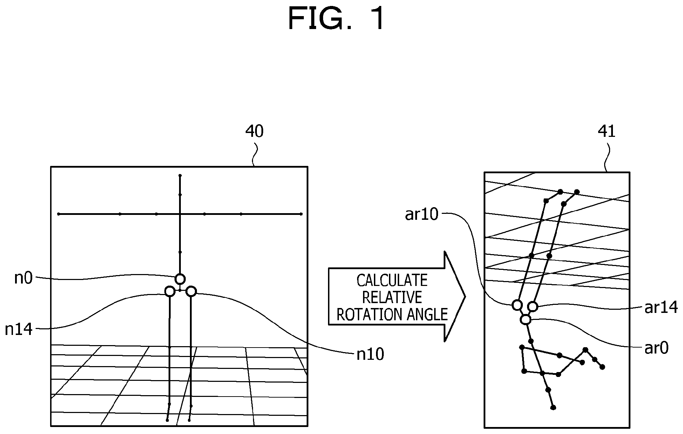

First, an example of processing in which the conversion device calculates the three-dimensional rotation angle of the ROOT by the rigid registration will be described. FIG. 1 is a diagram for describing the processing of calculating the three-dimensional rotation angle of the ROOT by the rigid registration. The conversion device divides the respective nodes of the hierarchical structure data (data regarding the reference posture) into three or more rigid joint nodes and other nodes according to a predefinition. As described with reference to FIG. 21, the respective nodes of the reference posture are nodes rn and n0 to n20. In the example illustrated in FIG. 1, the conversion device selects the nodes n0, n10, and n14 as the rigid joint nodes among the respective nodes included in a reference posture 40.

The conversion device specifies a joint group corresponding to the rigid joint nodes (nodes n0, n10, and n14) from the respective joints included in a 3D key point 41. In the example illustrated in FIG. 1, the joint group corresponding to the rigid joint nodes includes joints ar0, ar10, and ar14. In the following description, the joint group corresponding to the rigid joint nodes among the respective joints included in the 3D key point is referred to as "rigid correspondence joints".

The conversion device calculates a relative rotation angle from the rigid joint nodes (nodes n0, n10, and n14) to the rigid correspondence joints (joints ar0, ar10, and ar14) by the rigid registration, and sets the relative rotation angle as the three-dimensional rotation angle of the ROOT.

The rigid registration is a method of obtaining conversion parameters when a source is adjusted to a target by a least squares method according to Expression (4) from the source and the target, each of which is a combination of three or more points. The conversion parameters include a rotation matrix R, a translation t, and a scale c. In the present embodiment, the rotation matrix R is converted into an Euler angle and used as the three-dimensional rotation angle of the ROOT.
[Expression 1] ${e}^{2} \left(R, t, c\right) = \frac{1}{n} {\sum }_{i = 1}^{n} {\left‖{y}_{i}-\left(cR{x}_{i}+t\right)\right‖}^{2}$ (4)

In Expression (4), coordinates of the source including the three or more points are represented by "x". The coordinates of the source are three-dimensional coordinates of a rigid joint. Coordinates of the target including the three or more points are represented by "y". The coordinates of the target are three-dimensional coordinates of the rigid correspondence joint. The conversion device obtains the rotation matrix R, the translation t, and the scale c that minimize e² in Expression (4).

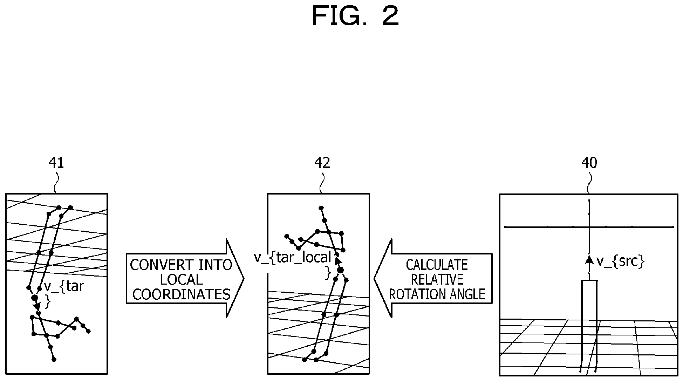

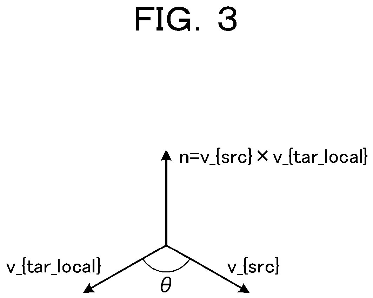

Subsequently, an example of processing in which the conversion device calculates the three-dimensional rotation angle of the JOINT by the Rodrigues' rotation formula will be described. FIGs. 2 and 3 are diagrams for describing the processing of calculating the three-dimensional rotation angle of the JOINT by the Rodrigues' rotation formula. First, FIG. 2 will be described. The conversion device converts a joint direction vector of a joint of interest of the 3D key point 41 into a joint direction vector of a local coordinate system. The joint direction vector of the 3D key point 41 is a vector from a lower joint to a higher joint in adjacent joints.

In the example illustrated in FIG. 2, description will be made assuming that the joint of interest is the joint ar0. A joint direction vector v_{tar} of the joint ar0 is a vector from the lower joint ar0 toward a higher joint ar1.

The conversion device multiplies the joint direction vector of the joint of interest by an inverse matrix (R⁻¹) of the rotation matrix R obtained by Expression (4) described above to convert the joint direction vector of the joint of interest into the joint direction vector of the local coordinate system. For example, by multiplying the joint direction vector v_{tar} of the joint of interest by R⁻¹, a joint direction vector v_{tar_local} of the local coordinate system is obtained. The conversion device repeatedly executes the processing described above for each joint of the 3D key point 41 to obtain a 3D key point 42 of the local coordinate system.

Subsequently, the conversion device specifies an angle θ formed by a joint direction vector of the 3D key point 42 and a joint direction vector of the reference posture 40 with a normal line between the joint direction vector of the 3D key point 42 and the joint direction vector of the reference posture 40 as a rotation axis. Here, as an example, description will be made using the joint direction vector v_{tar_local} of the 3D key point 42 and a joint direction vector v_{src} of the reference posture 40. The joint direction vector v_{src} is a vector from the node n0 toward a node n1 of the reference posture.

Description of FIG. 3 will be made. In FIG. 3, n is the normal line between the joint direction vector v_{tar_local} and the joint direction vector v_{src} of the reference posture 40. The conversion device specifies the normal line n by an outer product of the joint direction vector v_{tar_local} and the joint direction vector v_{src}. The conversion device specifies the angle θ formed by the joint direction vector v_{ tar_local} and the joint direction vector v_{src} with the normal line n as the rotation axis.

The conversion device uses the normal line n as the rotation axis, the formed angle θ as a rotation angle, calculates the relative rotation angle by the Rodrigues' rotation formula, and uses the relative rotation angle as the three-dimensional rotation angle of the JOINT.

The Rodrigues' rotation formula is a formula for calculating the rotation matrix R from the rotation axis (normal line n) and the rotation angle (formed angle θ) specified by a source and a target of the joint direction vector according to Expression (5). The source of the joint direction vector is the joint direction vector (v_{src}) of the reference posture 40. The target of the joint direction vector is the joint direction vector (v_{tar_local}) of the 3D key point 42 of the local coordinate system.
[Expression 2] ${R}_{n} \left(θ\right) = cos θ I + \left(1-cosθ\right) {n}^{t} n + sin θ {\left[n\right]}_{\times }$ (5)

The conversion device converts Rₙ (θ) obtained by Expression (5) into an Euler angle to use the Euler angle as the three-dimensional rotation angle of the JOINT.

As described above, the conversion device according to the present embodiment may reduce the calculation amount by calculating the relative rotation angle from the reference posture of the hierarchical structure data to the 3D key point. For example, the conversion device calculates the three-dimensional rotation angle of the ROOT by the rigid registration. Furthermore, the conversion device calculates the three-dimensional rotation angle of the JOINT by the Rodrigues' rotation formula.

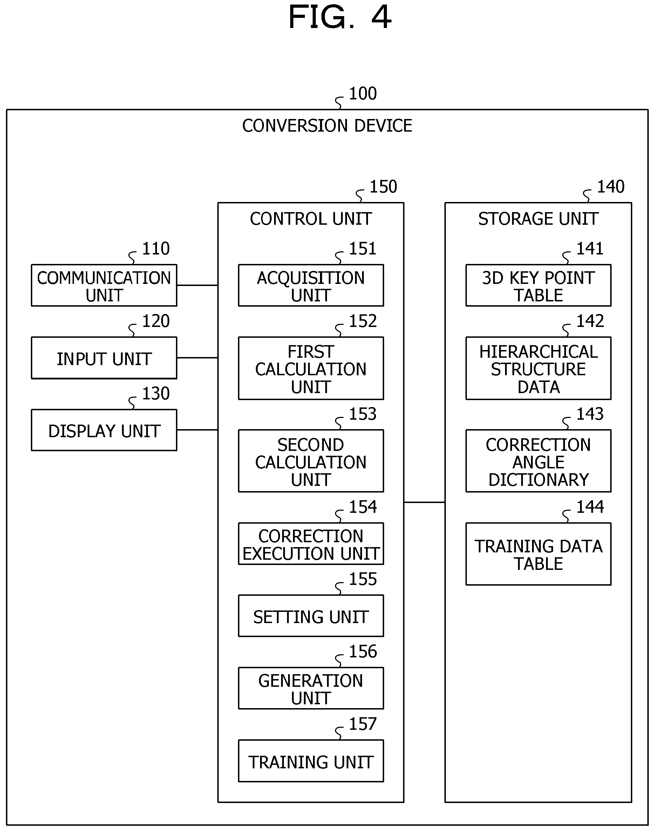

Next, a configuration example of the conversion device that executes the processing described with reference to FIGs. 1 to 3 will be described. FIG. 4 is a functional block diagram illustrating a configuration of the conversion device according to the present embodiment. As illustrated in FIG. 4, the conversion device 100 includes a communication unit 110, an input unit 120, a display unit 130, a storage unit 140, and a control unit 150.

The communication unit 110 executes data communication with an external device or the like via a network. The communication unit 110 is a network interface card (NIC) or the like. The control unit 150 to be described later exchanges data with an external device via the communication unit 110.

The input unit 120 is an input device that inputs various types of information to the control unit 150 of the conversion device 100. For example, the input unit 120 corresponds to a keyboard, a mouse, a touch panel, or the like.

The display unit 130 is a display device that displays information output from the control unit 150.

The storage unit 140 includes a 3D key point table 141, hierarchical structure data 142, a correction angle dictionary 143, and a training data table 144. The storage unit 140 is a storage device such as a memory.

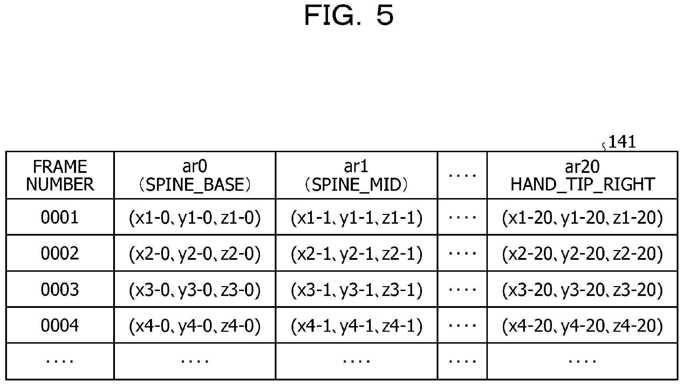

The 3D key point table 141 is a table that holds information regarding a 3D key point. FIG. 5 is a diagram illustrating an example of a data structure of the 3D key point table. As illustrated in FIG. 5, the 3D key point table 141 holds frame numbers and three-dimensional coordinates corresponding to the respective joints (identification information regarding the joints) in association with each other.

The frame number is a frame number for identifying an image used in a case where a 3D key point is generated. The identification information regarding each joint is information for uniquely specifying the joint. In the description of FIG. 5, joints ar0 to ar20 are used as the identification information regarding the joints. For example, the joint ar0 corresponds to "SPINE_BASE". The joint ar1 corresponds to "SPINE_MID". The joint ar20 corresponds to "HAND_TIP_RIGHT". Relationships between the other joints and joint names are illustrated in FIG. 20.

The respective three-dimensional coordinates of the joints ar0 to ar20 corresponding to a certain frame number (for example, 0001) in the 3D key point table 141 are 3D key points corresponding to the certain frame number (for example, 0001).

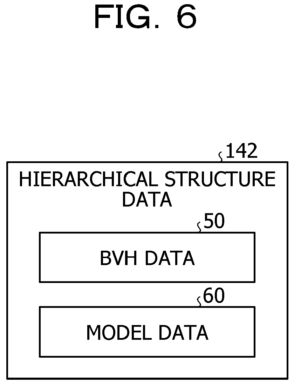

The hierarchical structure data 142 is data obtained by converting a 3D key point. FIG. 6 is a diagram for describing an example of a data structure of the hierarchical structure data. As illustrated in FIG. 6, the hierarchical structure data 142 includes BVH data 50 and model data 60.

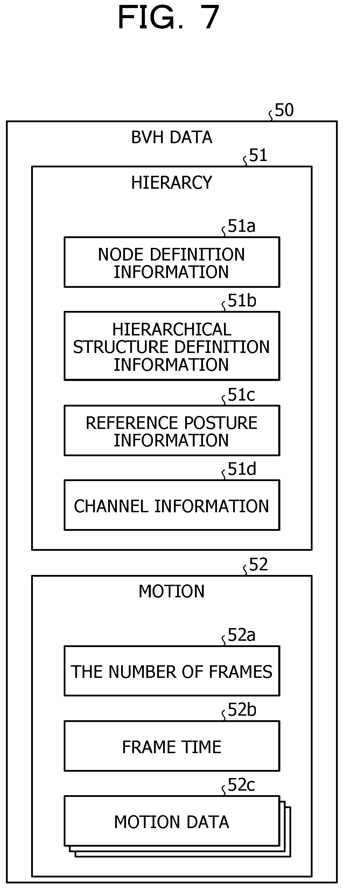

FIG. 7 is a diagram illustrating an example of a data structure of the BVH data. As illustrated in FIG. 7, the BVH data includes HIERARCY 51 and MOTION 52. The HIERARCY 51 includes node definition information 51a, hierarchical structure definition information 51b, reference posture information 51c, and channel information 51d.

The node definition information 51a is information that defines which node is the ROOT, which node is the JOINT, and which node is End among the nodes rn and n0 to n20 illustrated in FIG. 21. For example, the node rn is the ROOT. The nodes n0 to n2, n4 to n12, n14 to n16, and n18 are the JOINTs. The nodes n3, n13, n17, n19, and n20 are the Ends.

The hierarchical structure definition information 51b is information that defines a coupling order of nodes from the highest ROOT to the lowest End.

The reference posture information 51c is information regarding the reference posture described with reference to FIG. 21. For example, in the reference posture information 51c, a joint direction vector of each node serving as the reference posture is defined.

The channel information 51d is information that defines data registered in motion data 52c of each frame to be described later.

The MOTION 52 includes the number of frames 52a, a frame time 52b, and the motion data 52c. The number of frames 52a indicates the total number of frames. The frame time 52b indicates a time per frame.

In the motion data 52c, a three-dimensional position of ROOT, a three-dimensional rotation angle of the ROOT, and a three-dimensional rotation angle of each JOINT are registered as information regarding one frame. One piece of the motion data 52c is generated from one 3D key point.

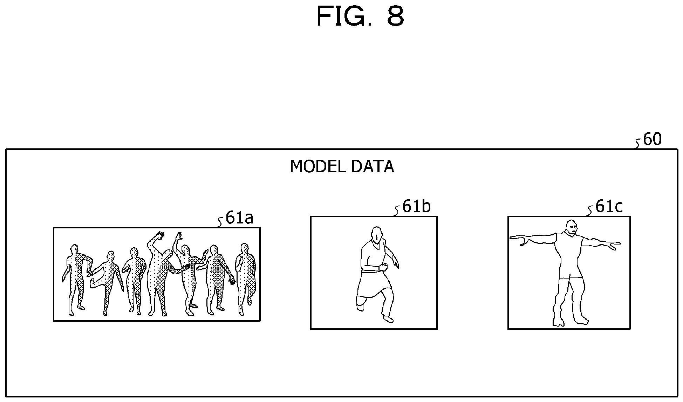

FIG. 8 is a diagram illustrating an example of the model data. For example, the model data 60 includes a skinned multi-person linear model (SMPL) 61a, a MakeHuman 61b, an Autodesk Character Generator 61c, and the like.

The SMPL 61a is a 3D body computer graphics (CG) model that is trained with 3D height scan data, in which it is possible to adjust a posture and a body shape. The MakeHuman 61b is a 3D body CG model in which it is possible to adjust a gender, a height, a body shape, a race, and the like. The Autodesk Character Generator 61c is a 3D body CG model in which it is possible to adjust details such as a facial expression, a muscle, hair, and a style.

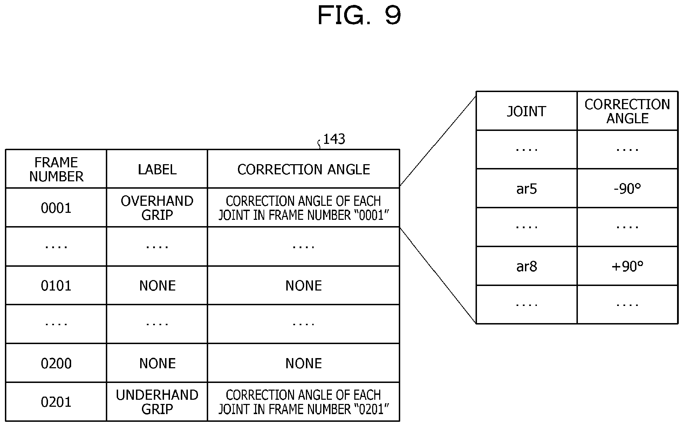

The description returns to FIG. 4. The correction angle dictionary 143 is a dictionary that holds information for correcting a three-dimensional rotation angle of JOINT. FIG. 9 is a diagram illustrating an example of a data structure of the correction angle dictionary. As illustrated in FIG. 9, the correction angle dictionary 143 associates a frame number, a label, and a correction angle.

The frame number is a frame number for identifying an image used in a case where a 3D key point is generated, and is also information for identifying the 3D key point. As the label, labels such as "overhand grip" and "underhand grip" are set. In a case where the label is "none", it means that there is no corresponding correction angle. As the correction angle, a correction angle of each joint is set. The three-dimensional rotation angle of the JOINT is corrected based on such a correction angle.

The training data table 144 holds training data generated based on the hierarchical structure data 142. The training data is data in which an input is an image and a correct answer label is joint coordinates. The training data is used in a case where a machine learning model such as a neural network (NN) is trained.

The description returns to FIG. 4. The control unit 150 includes an acquisition unit 151, a first calculation unit 152, a second calculation unit 153, a correction execution unit 154, a setting unit 155, a generation unit 156, and a training unit 157. The control unit 150 is a central processing unit (CPU), a graphics processing unit (GPU), or the like.

The acquisition unit 151 acquires information regarding the 3D key point table 141, information regarding the correction angle dictionary 143, and the like from an external device or the like via a network. The acquisition unit 151 stores the acquired information regarding the 3D key point table 141 and the correction angle dictionary 143 in the storage unit 140.

The first calculation unit 152 acquires a 3D key point from the 3D key point table 141, and acquires a reference posture from the hierarchical structure data 142. It is assumed that a frame number is assigned to the 3D key point. The first calculation unit 152 calculates a three-dimensional rotation angle of ROOT by the rigid registration based on the reference posture and the 3D key point. Processing in which the first calculation unit 152 calculates the three-dimensional rotation angle of the ROOT by the rigid registration corresponds to the processing described with reference to FIG. 1. The first calculation unit 152 converts the three-dimensional rotation angle of the ROOT into an Euler angle by a predetermined conversion formula.

Note that the first calculation unit 152 calculates a length of a bone between joints based on the 3D key point. The first calculation unit 152 performs the calculation as three-dimensional coordinates of the ROOT.

The first calculation unit 152 outputs the 3D key point, the reference posture, and a calculation result (the three-dimensional rotation angle of the ROOT <rotation matrix R, Euler angle> and the three-dimensional coordinates of the ROOT) to the second calculation unit 153.

The second calculation unit 153 calculates a three-dimensional rotation angle of each JOINT by the Rodrigues' rotation formula based on a 3D key point, a reference posture, and a three-dimensional rotation angle of ROOT <rotation matrix R>. Processing in which the second calculation unit 153 calculates the three-dimensional rotation angle of each JOINT by the Rodrigues' rotation formula corresponds to the processing described with reference to FIGs. 2 and 3. The second calculation unit 153 converts the three-dimensional rotation angle of each JOINT into an Euler angle by a predetermined conversion formula.

The second calculation unit 153 outputs the 3D key point, the three-dimensional rotation angle of the ROOT (<rotation matrix R, Euler angle>), a calculation result (the three-dimensional rotation angle of each JOINT <rotation matrix R, Euler angle>), and three-dimensional coordinates of the ROOT to the correction execution unit 154.

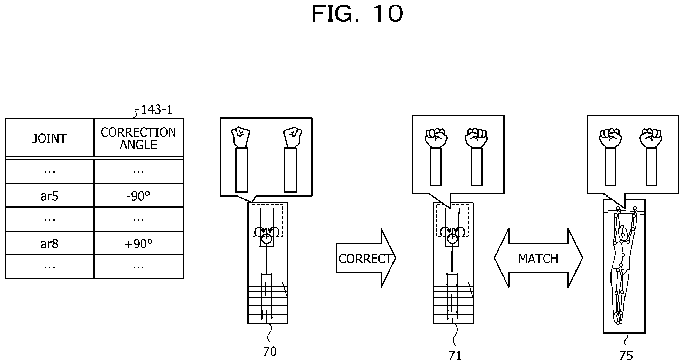

The correction execution unit 154 corrects a three-dimensional rotation angle (Euler angle) of each JOINT based on the correction angle dictionary 143. FIG. 10 is a diagram for describing processing of the correction execution unit. BVH data 70 of FIG. 10 is data in which the three-dimensional rotation angle (before correction) of each JOINT is applied to a reference posture. Here, information regarding a correction angle of each joint corresponding to a frame number of a 3D key point, which is a correction angle of the correction angle dictionary 143, is set as correction angle information 143-1. In the correction angle information 143-1, a correction angle of the joint ar5 is "-90°", and a correction angle of the joint ar8 is "+90°".

The correction execution unit 154 corrects a three-dimensional rotation angle of the node n8 corresponding to the joint ar5 among the respective nodes (joints) of the BVH data 70 with the correction angle "-90°". Furthermore, the correction execution unit 154 corrects a three-dimensional rotation angle of the node n8 corresponding to the joint ar8 among the respective nodes (joints) of the BVH data 70 with the correction angle "+90°". The correction execution unit 154 executes such correction on the BVH data 70 to generate BVH data 71. Although the rotation angles corresponding to the joints ar5 and ar8 of the BVH data 70 do not match a rotation angle of a posture 75 of an actual person, rotation angles corresponding to the joints ar5 and ar8 of the BVH data 71 match the rotation angle of the posture 75 of the actual person.

Note that the correction execution unit 154 corrects the three-dimensional rotation angle of the JOINT by the following procedure. The correction execution unit 154 converts the three-dimensional rotation angle (in the form of the Euler angle) of the JOINT before correction into a three-dimensional rotation angle (in the form of the rotation matrix R). The correction execution unit 154 calculates a correction rotation matrix R_{correct} of a correction angle from a direction of a joint of interest and the correction angle. The correction execution unit 154 calculates a three-dimensional rotation angle (in the form of the rotation matrix R) after correction by multiplying the three-dimensional rotation angle (in the form of the rotation matrix R) before correction by the correction rotation matrix R_{correct}.

The correction execution unit 154 returns the three-dimensional rotation angle (in the form of the rotation matrix R) after correction to a three-dimensional rotation angle (in the form of the Euler angle) after correction, and updates the three-dimensional rotation angle of the JOINT.

Note that, in a case where the correction angle of each joint corresponding to the frame number of the 3D key point is "none", the correction execution unit 154 interpolates the correction angle based on the correction angles of the preceding and subsequent frame numbers. For example, the correction execution unit 154 executes spherical linear interpolation. The correction execution unit 154 corrects the three-dimensional rotation angle of the JOINT as described above using the interpolated correction angle.

The correction execution unit 154 outputs the 3D key point, a three-dimensional rotation angle of ROOT (in the form of the Euler angle), the three-dimensional rotation angle of each JOINT (in the form of the Euler angle), and three-dimensional coordinates of the ROOT to the setting unit 155.

The first calculation unit 152, the second calculation unit 153, and the correction execution unit 154 described above repeatedly execute the processing described above for each 3D key point.

The setting unit 155 sets various types of information in the hierarchical structure data 142. For example, the setting unit 155 describes information regarding the HIERARCY 51 and the MOTION 52 in the hierarchical structure data 142. The setting unit 155 describes the HIERARCY 51 based on information prepared in advance. The setting unit 155 describes the number of frames 52a and the frame time 52b of the MOTION 52 based on information prepared in advance. The setting unit 155 describes the motion data 52c based on calculation results of the first calculation unit 152, the second calculation unit 153, and the correction execution unit 154.

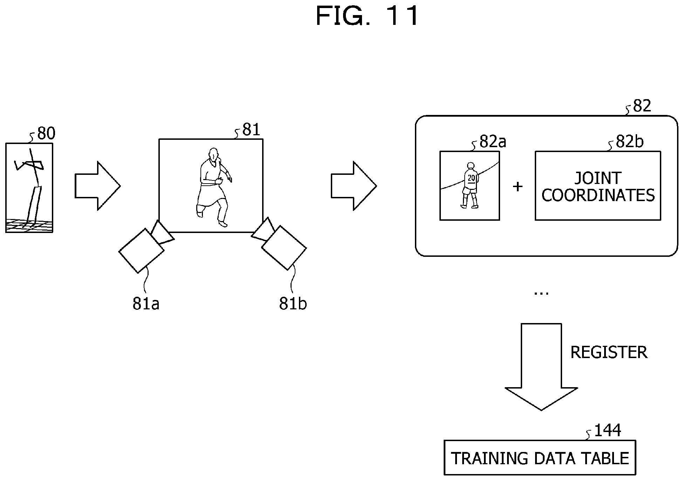

The generation unit 156 generates training data based on the hierarchical structure data 142. FIG. 11 is a diagram for describing processing of the generation unit. The generation unit 156 generates BVH data 80 by applying a three-dimensional rotation angle (in the form of the Euler angle) of ROOT and a three-dimensional rotation angle (in the form of the Euler angle) of each JOINT to a reference posture of the hierarchical structure data 142.

The generation unit 156 generates a model 81 of a person based on the BVH data 80 and the model data 60. The generation unit 156 sets virtual cameras 81a and 81b. The generation unit 156 generates the respective images of the model 81 from virtual viewpoint positions using the virtual cameras 81a and 81b. For example, the generation unit 156 generates training data 82 by associating an image 82a captured by the virtual camera 81a with joint coordinates 82b of the model 81 of the person.

The generation unit 156 generates a plurality of pieces of the training data by repeatedly executing the processing described above, and registers the generated pieces of training data in the training data table 144.

The training unit 157 trains a training model based on training data of the training data table 144. For example, the training unit 157 updates a parameter based on backpropagation such that an error between an output obtained by inputting an image to the training model and a correct answer label (joint coordinates) is reduced.

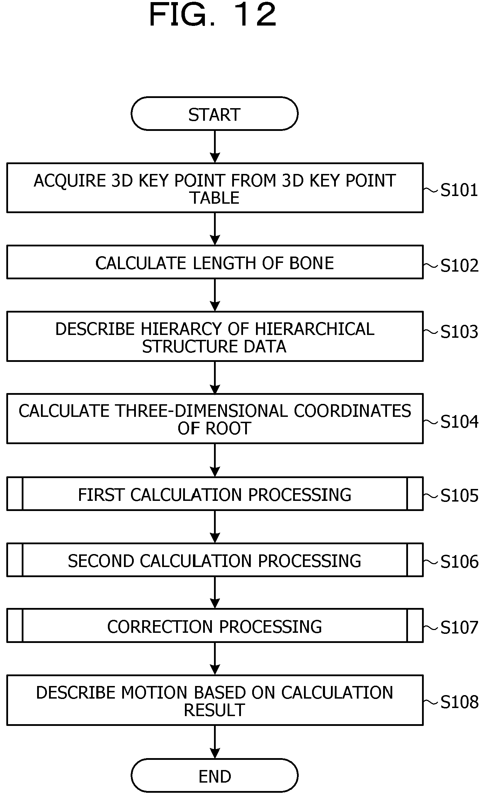

Next, an example of a processing procedure of the conversion device 100 according to the present embodiment will be described. FIG. 12 is a flowchart illustrating the processing procedure of the conversion device according to the present embodiment. As illustrated in FIG. 12, the first calculation unit 152 of the conversion device 100 acquires a 3D key point from the 3D key point table 141 (step S101). The first calculation unit 152 calculates a length of a bone (step S102).

The setting unit 155 of the conversion device 100 describes the HIERARCY 51 of the hierarchical structure data 142 (step S103). The first calculation unit 152 calculates three-dimensional coordinates of ROOT (step S104). The first calculation unit 152 executes first calculation processing (calculation processing of a three-dimensional rotation angle of the ROOT by the rigid registration) (step S105).

The second calculation unit 153 of the conversion device 100 executes second calculation processing (calculation processing of a three-dimensional rotation angle of JOINT by the Rodrigues' rotation formula) (step S106). The correction execution unit 154 of the conversion device 100 executes correction processing (step S107).

The setting unit 155 describes the MOTION 52 of the hierarchical structure data 142 based on a calculation result (step S108).

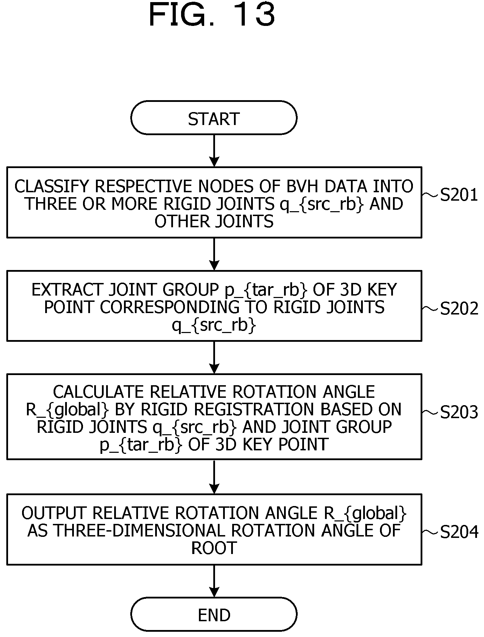

Next, a processing procedure of the first calculation processing indicated in step S105 of FIG. 12 will be described. FIG. 13 is a flowchart illustrating the processing procedure of the first calculation processing. As illustrated in FIG. 13, the first calculation unit 152 of the conversion device 100 classifies the respective nodes of BVH data into three or more rigid joints q_{src_rb} and other joints (step S201).

The first calculation unit 152 extracts a joint group p_{tar_rb} of the 3D key point corresponding to the rigid joints q_{src_rb} (step S202). The first calculation unit 152 calculates a relative rotation angle R_{global} by the rigid registration based on the rigid joints q_{src_rb} and the joint group p_{tar_rb} of the 3D key point (step S203).

The first calculation unit 152 outputs the relative rotation angle R_{global} as the three-dimensional rotation angle of the ROOT (step S204).

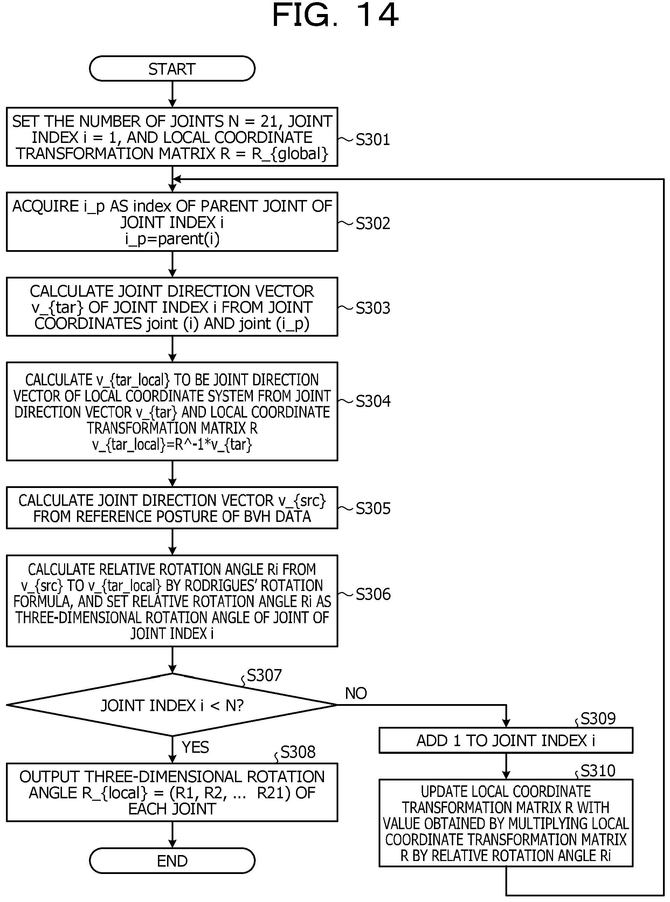

Next, a processing procedure of the second calculation processing indicated in step S106 of FIG. 12 will be described. FIG. 14 is a flowchart illustrating the processing procedure of the second calculation processing. As illustrated in FIG. 14, the second calculation unit 153 of the conversion device 100 sets the number of joints N = 21, a joint index i = 1, and a local coordinate transformation matrix R = R_{global} (step S301).

The second calculation unit 153 acquires i_p as an index of a parent joint of the joint index i based on Expression (6) (step S302). A data array in which a joint index and an index of a parent joint thereof are associated with each other is represented by "parent", and when the joint index i is input, the index of the parent joint thereof is output as "parent (i)".$i_p = parent \left(i\right)$ (6)

The second calculation unit 153 calculates a joint direction vector v_{tar} of the joint index i from joint coordinates joint (i) and joint (i_p) based on Expression (7) (step S303). A data array in which a joint index and joint coordinates thereof are associated with each other is represented by "joint", and when the joint index i is input, the joint coordinates joint (i) are output.$v_ \left\{tar\right\} = joint \left(i\right) - joint \left(i_p\right)$ (7)

The second calculation unit 153 calculates v_{tar_local} to be a joint direction vector of the local coordinate system from the joint direction vector v_{tar} and the local coordinate transformation matrix R based on Expression (8) (step S304).$v_ \left\{tar_local\right\} = {R}^{∧} - 1 * v_ \left\{tar\right\}$ (8)

The second calculation unit 153 calculates a joint direction vector v_{src} from a reference posture of the BVH data (step S305). The second calculation unit 153 calculates a relative rotation angle Ri from v_{src} to v_{tar_local} by the Rodrigues' rotation formula, and sets the relative rotation angle Ri as a three-dimensional rotation angle of JOINT of the joint index i (step S306).

In a case where the joint index i is less than N (Step S307, Yes), the second calculation unit 153 outputs a three-dimensional rotation angle R_{local} = (R1, R2, ... R21) of each JOINT (step S308).

On the other hand, in a case where the joint index i is not less than N (Step S307, No), the second calculation unit 153 adds 1 to the joint index i (step S309). The second calculation unit 153 updates the local coordinate transformation matrix R with a value obtained by multiplying the local coordinate transformation matrix R by the relative rotation angle Ri (step S310), and proceeds to step S302.

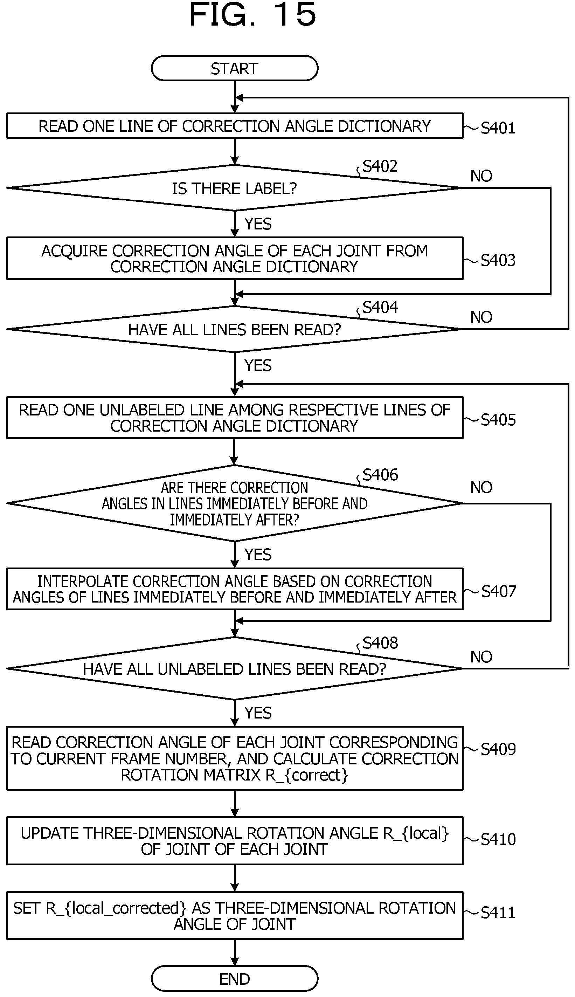

Next, a processing procedure of the correction processing indicated in step S107 of FIG. 12 will be described. FIG. 15 is a flowchart illustrating the processing procedure of the correction processing. As illustrated in FIG. 15, the correction execution unit 154 of the conversion device 100 reads one line of the correction angle dictionary 143 (step S401). In a case where there is no label in the read line (step S402, No), the correction execution unit 154 proceeds to step S404.

In a case where there is a label in the read line (Step S402, Yes), the correction execution unit 154 acquires a correction angle of each joint from the correction angle dictionary 143 (step S403).

In a case where all lines of the correction angle dictionary 143 have not been read (step S404, No), the correction execution unit 154 proceeds to step S401. On the other hand, in a case where all the lines of the correction angle dictionary 143 have been read (step S404, Yes), the correction execution unit 154 proceeds to step S405.

The correction execution unit 154 reads one unlabeled line of the correction angle dictionary 143 (step S405). The correction execution unit 154 determines whether or not there are the correction angles in lines immediately before and immediately after the read line (step S406). The correction execution unit 154 interpolates the correction angle based on the correction angles of the lines immediately before and immediately after (step S407).

In a case where all unlabeled lines of the correction angle dictionary 143 have not been read (step S408, No), the correction execution unit 154 proceeds to step S405. On the other hand, in a case where all the unlabeled lines of the correction angle dictionary 143 have been read (step S408, Yes), the correction execution unit 154 proceeds to step S409.

The correction execution unit 154 reads the correction angle of each joint corresponding to a current frame number, and calculates a correction rotation matrix R_{correct} (step S409). The correction execution unit 154 updates the three-dimensional rotation angle R_{local} of the JOINT of each joint based on Expression (9) (Step S410).$R_ \left\{local_corrected\right\} = R_ \left\{correct\right\} * R_ \left\{local\right\}$ (8)

The correction execution unit 154 sets R_{local_corrected} as the three-dimensional rotation angle of the JOINT (step S411).

Next, effects of the conversion device 100 according to the present embodiment will be described. The conversion device 100 acquires a 3D key point and a reference posture of the hierarchical structure data 142, calculates a relative rotation angle from a predetermined joint of the reference posture to a corresponding joint of the 3D key point, and sets the relative rotation angle in the hierarchical structure data 142. As a result, it is possible to reduce the calculation amount and generate the hierarchical structure data from the 3D key point.

For example, the conversion device 100 calculates a relative rotation angle from rigid joint nodes in the reference posture to a joint group of the 3D key point corresponding to such rigid joint nodes by the rigid registration. As a result, it is possible to efficiently calculate a three-dimensional rotation angle of ROOT without performing repetitive calculation.

The conversion device 100 converts a joint direction vector of the 3D key point into a joint direction vector of the local coordinate system. The conversion device 100 specifies an angle θ formed by the respective joint direction vectors with a normal line between the joint direction vector of the 3D key point and a joint direction vector of the reference posture as a rotation axis, calculates a relative rotation angle by the Rodrigues' rotation formula, and uses the relative rotation angle as a three-dimensional rotation angle of JOINT. As a result, it is possible to efficiently calculate the three-dimensional rotation angle of each JOINT without performing repetitive calculation.

Furthermore, by calculating the relative rotation angle by the Rodrigues' rotation formula, it is possible to obtain the three-dimensional rotation angle of the JOINT in the shortest path, and it is possible to suppress an unnatural twist rotation angle for humans.

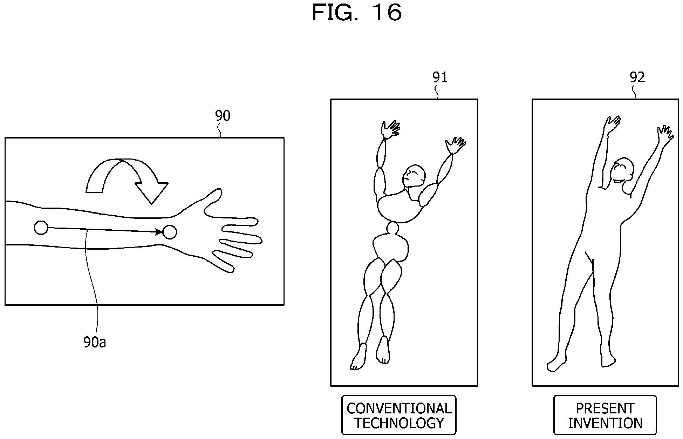

FIG. 16 is a diagram for describing the effects of the conversion device according to the present embodiment. For example, a twist rotation angle is a rotation angle with a bone 90a illustrated in an image 90 as an axis. A human body model 91 is a human body model generated by using a result of converting a 3D key point into hierarchical structure data by a conventional technology. A human body model 92 is a human body model generated by using a result of converting a 3D key point into hierarchical structure data by the conversion device 100 according to the present embodiment.

The human body model 91 takes an unnatural twist rotation angle at which a joint is twisted, but the human body model 92 does not take an unnatural twist rotation angle.

Furthermore, the conversion device 100 according to the present embodiment corrects the three-dimensional rotation angle of the JOINT based on information regarding a correction angle in the correction angle dictionary 143. As a result, it is possible to obtain the twist rotation angle that matches actual twist rotation that is difficult to obtain in the conventional technology.

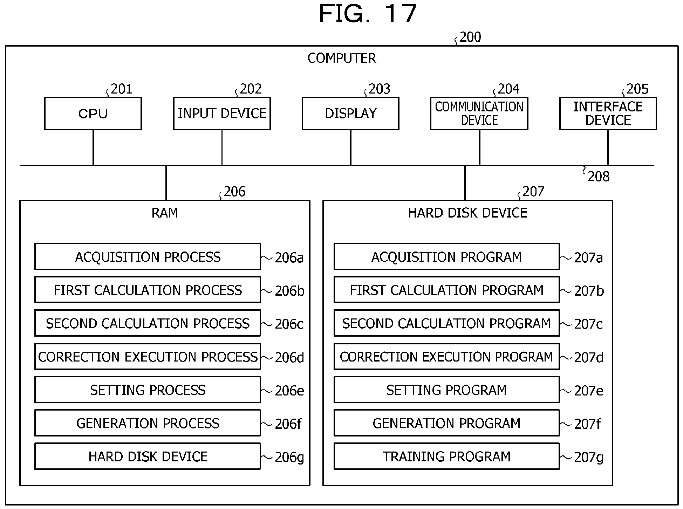

Next, an example of a hardware configuration of a computer that implements functions similar to those of the conversion device 100 described above will be described. FIG. 17 is a diagram illustrating an example of the hardware configuration of the computer that implements the functions similar to those of the conversion device of the embodiment.

As illustrated in FIG. 17, a computer 200 includes a CPU 201 that executes various types of arithmetic processing, an input device 202 that receives data input made by a user, and a display 203. Furthermore, the computer 200 includes a communication device 204 that exchanges data with a camera 15, an external device, and the like via a wired or wireless network, and an interface device 205. Furthermore, the computer 200 includes a RAM 206 that temporarily stores various types of information, and a hard disk device 207. Additionally, each of the devices 201 to 207 is coupled to a bus 208.

The hard disk device 207 includes an acquisition program 207a, a first calculation program 207b, a second calculation program 207c, a correction execution program 207d, a setting program 207e, a generation program 207f, and a training program 207g. Furthermore, the CPU 201 reads each of the programs 207a to 207g and develops the program to the RAM 206.

The acquisition program 207a functions as an acquisition process 206a. The first calculation program 207b functions as a first calculation process 206b. The second calculation program 207c functions as a second calculation process 206c. The correction execution program 207d functions as a correction execution process 206d. The setting program 207e functions as a setting process 206e. The generation program 207f functions as a generation process 206f. The training program 207g functions as a training process 206g.

Processing of the acquisition process 206a corresponds to the processing of the acquisition unit 151. Processing of the first calculation process 206b corresponds to the processing of the first calculation unit 152. Processing of the second calculation process 206c corresponds to the processing of the second calculation unit 153. Processing of the correction execution process 206d corresponds to the processing of the correction execution unit 154. Processing of the setting process 206e corresponds to the processing of the setting unit 155. Processing of the generation process 206f corresponds to the processing of the generation unit 156. Processing of the training process 206g corresponds to the processing of the training unit 157.

Note that each of the programs 207a to 207g does not necessarily have to be stored in the hard disk device 207 from the beginning. For example, each of the programs is stored in a "portable physical medium" to be inserted into the computer 200, such as a flexible disk (FD), a CD-ROM, a DVD, a magneto-optical disk, or an IC card. Then, the computer 200 may read and execute each of the programs 207a to 207g.

## Claims

1. A conversion method executed by a computer, the conversion method comprising processing of:
acquiring skeleton information in which each of a plurality of joints included in a human body and coordinates for the plurality of joints is set, and reference posture information in which each of a plurality of joints included in a human body and reference coordinates for the plurality of joints is set;
specifying a second joint that corresponds to a first joint set in the reference posture information from the plurality of joints set in the skeleton information;
calculating a relative rotation angle from reference coordinates of the first joint to coordinates of the second joint; and
converting the skeleton information into hierarchical structure data by setting the relative rotation angle to the hierarchical structure data.

2. The conversion method according to claim 1, wherein, in the processing of calculating, relative rotation angles from reference coordinates of a plurality of the first joints to coordinates of a plurality of the second joints are calculated by rigid registration.

3. The conversion method according to claim 2, wherein, in the processing of calculating, the relative rotation angle is further calculated by converting a second vector of the second joint based on a calculation result of the rigid registration, and applying, to a Rodrigues' rotation formula, an angle formed between a first vector of the first joint and the converted second vector of the second joint with a normal line between the first vector and the second vector as a rotation axis.

4. The conversion method according to claim 3, further comprising processing of correcting the relative rotation angle based on a correction angle set in the skeleton information.

5. A conversion program for causing a computer to execute a processing comprising:
acquiring skeleton information in which each of a plurality of joints included in a human body and coordinates for the plurality of joints is set, and reference posture information in which each of a plurality of joints included in a human body and reference coordinates for the plurality of joints is set;
specifying a second joint that corresponds to a first joint set in the reference posture information from the plurality of joints set in the skeleton information;
calculating a relative rotation angle from reference coordinates of the first joint to coordinates of the second joint; and
converting the skeleton information into hierarchical structure data by setting the relative rotation angle to the hierarchical structure data.

6. The conversion program according to claim **5,** wherein, in the processing of calculating, relative rotation angles from reference coordinates of a plurality of the first joints to coordinates of a plurality of the second joints are calculated by rigid registration.

7. The conversion program according to claim **6,** wherein, in the processing of calculating, the relative rotation angle is further calculated by converting a second vector of the second joint based on a calculation result of the rigid registration, and applying, to a Rodrigues' rotation formula, an angle formed between a first vector of the first joint and the converted second vector of the second joint with a normal line between the first vector and the second vector as a rotation axis.

8. The conversion program according to claim 7, further comprising processing of correcting the relative rotation angle based on a correction angle set in the skeleton information.

9. A conversion device comprising:
a control unit configured to
acquire skeleton information in which each of a plurality of joints included in a human body and coordinates for the plurality of joints is set, and reference posture information in which each of a plurality of joints included in a human body and reference coordinates for the plurality of joints is set;
specify a second joint that corresponds to a first joint set in the reference posture information from the plurality of joints set in the skeleton information;
calculate a relative rotation angle from reference coordinates of the first joint to coordinates of the second joint; and
convert the skeleton information into hierarchical structure data by setting the relative rotation angle to the hierarchical structure data.

10. The conversion device according to claim 9, wherein,
the control unit calculates relative rotation angles from reference coordinates of a plurality of the first joints to coordinates of a plurality of the second joints by rigid registration.

11. The conversion device according to claim 10, wherein,
the control unit further calculates, by converting a second vector of the second joint based on a calculation result of the rigid registration, and applying, to a Rodrigues' rotation formula, an angle formed between a first vector of the first joint and the converted second vector of the second joint with a normal line between the first vector and the second vector as a rotation axis.

12. The conversion device according to claim 11, the control unit further configured to
correct the relative rotation angle based on a correction angle set in the skeleton information.

## Patentansprüche

1. Computerimplementiertes Umwandlungsverfahren, wobei das Umwandlungsverfahren das Verarbeiten von Folgendem umfasst:
Erfassen von Skelettinformationen, in denen jeweils eines einer Vielzahl von in dem menschlichen Körper eingeschlossenen Gelenken sowie Koordinaten für die Vielzahl von Gelenken festgelegt ist, und von Referenzhaltungsinformationen, in denen jeweils eines einer Vielzahl von in dem menschlichen Körper eingeschlossenen Gelenken sowie Referenzkoordinaten für die Vielzahl von Gelenken festgelegt sind;
Spezifizieren eines zweiten Gelenks, das einem ersten Gelenk entspricht, das in den Referenzhaltungsinformationen festgelegt ist, aus der Vielzahl von Gelenken, die in den Skelettinformationen festgelegt sind;
Berechnen eines relativen Rotationswinkels von den Referenzkoordinaten des ersten Gelenks zu den Koordinaten des zweiten Gelenks; und
Umwandeln der Skelettinformationen in hierarchische Strukturdaten durch das Festlegen des relativen Rotationswinkels auf die hierarchischen Strukturdaten.

2. Umwandlungsverfahren nach Anspruch 1, wobei bei dem Verarbeiten des Berechnens relative Rotationswinkel von Referenzkoordinaten einer Vielzahl der ersten Gelenke zu Koordinaten einer Vielzahl der zweiten Gelenke durch starre Registrierung berechnet werden.

3. Umwandlungsverfahren nach Anspruch 2, wobei bei dem Verarbeiten des Berechnens der relativen Rotationswinkel weiter berechnet wird durch Umwandeln eines zweiten Vektors des zweiten Gelenks auf der Grundlage eines Berechnungsergebnisses der starren Registrierung, und Anwenden, auf eine Rodrigues-Rotationsformel, eines Winkels, der zwischen einem ersten Vektor des ersten Gelenks und dem umgewandelten zweiten Vektor des zweiten Gelenks gebildet wird, wobei eine Normallinie zwischen dem ersten und dem zweiten Vektor als Rotationsachse dient.

4. Umwandlungsverfahren nach Anspruch 3, weiter umfassend das Verarbeiten des Korrigierens des relativen Rotationswinkels auf der Grundlage eines Korrekturwinkels, der in den Skelettinformationen festgelegt ist.

5. Umwandlungsprogramm, das einen Computer veranlasst, eine Verarbeitung auszuführen, die Folgendes umfasst:
Erfassen von Skelettinformationen, in denen jeweils eines einer Vielzahl von in dem menschlichen Körper eingeschlossenen Gelenken sowie Koordinaten für die Vielzahl von Gelenken festgelegt ist, und von Referenzhaltungsinformationen, in denen jeweils eines einer Vielzahl von in dem menschlichen Körper eingeschlossenen Gelenken sowie Referenzkoordinaten für die Vielzahl von Gelenken festgelegt sind;
Spezifizieren eines zweiten Gelenks, das einem ersten Gelenk entspricht, das in den Referenzhaltungsinformationen festgelegt ist, aus der Vielzahl von Gelenken, die in den Skelettinformationen festgelegt sind;
Berechnen eines relativen Rotationswinkels von den Referenzkoordinaten des ersten Gelenks zu den Koordinaten des zweiten Gelenks; und
Umwandeln der Skelettinformationen in hierarchische Strukturdaten durch das Festlegen des relativen Rotationswinkels auf die hierarchischen Strukturdaten.

6. Umwandlungsprogramm nach Anspruch 5, wobei bei dem Verarbeiten des Berechnens relative Rotationswinkel von Referenzkoordinaten einer Vielzahl der ersten Gelenke zu Koordinaten einer Vielzahl der zweiten Gelenke durch starre Registrierung berechnet werden.

7. Umwandlungsprogramm nach Anspruch 6, wobei bei dem Verarbeiten des Berechnens der relativen Rotationswinkel weiter berechnet wird durch Umwandeln eines zweiten Vektors des zweiten Gelenks auf der Grundlage eines Berechnungsergebnisses der starren Registrierung, und Anwenden, auf eine Rodrigues-Rotationsformel, eines Winkels, der zwischen einem ersten Vektor des ersten Gelenks und dem umgewandelten zweiten Vektor des zweiten Gelenks gebildet wird, wobei eine Normallinie zwischen dem ersten und dem zweiten Vektor als Rotationsachse dient.

8. Umwandlungsprogramm nach Anspruch 7, weiter umfassend das Verarbeiten des Korrigierens des relativen Rotationswinkels auf der Grundlage eines Korrekturwinkels, der in den Skelettinformationen festgelegt ist.

9. Umwandlungsvorrichtung, umfassend:
eine Steuereinheit, die konfiguriert ist zum
Erfassen von Skelettinformationen, in denen jeweils eines einer Vielzahl von in dem menschlichen Körper eingeschlossenen Gelenken sowie Koordinaten für die Vielzahl von Gelenken festgelegt sind, und von Referenzhaltungsinformationen, in denen jeweils eines einer Vielzahl von in dem menschlichen Körper eingeschlossenen Gelenken sowie Referenzkoordinaten für die Vielzahl von Gelenken festgelegt sind;
Spezifizieren eines zweiten Gelenks, das einem ersten Gelenk entspricht, das in den Referenzhaltungsinformationen festgelegt ist, aus der Vielzahl von Gelenken, die in den Skelettinformationen festgelegt sind;
Berechnen eines relativen Rotationswinkels von den Referenzkoordinaten des ersten Gelenks zu den Koordinaten des zweiten Gelenks; und
Umwandeln der Skelettinformationen in hierarchische Strukturdaten durch das Festlegen des relativen Rotationswinkels auf die hierarchischen Strukturdaten.

10. Umwandlungsvorrichtung nach Anspruch 9, wobei
die Steuereinheit die relativen Rotationswinkel von den Referenzkoordinaten einer Vielzahl der ersten Gelenke zu den Koordinaten einer Vielzahl der zweiten Gelenke durch starre Registrierung berechnet.

11. Umwandlungsvorrichtung nach Anspruch 10, wobei
die Steuereinheit weiter berechnet, indem sie einen zweiten Vektor des zweiten Gelenks auf der Grundlage eines Berechnungsergebnisses der starren Registrierung umwandelt und auf eine Rodrigues-Rotationsformel einen Winkel anwendet, der zwischen einem ersten Vektor des ersten Gelenks und dem umgewandelten zweiten Vektor des zweiten Gelenks gebildet wird, wobei eine Normalenlinie zwischen dem ersten Vektor und dem zweiten Vektor als Rotationsachse dient.

12. Umwandlungsvorrichtung nach Anspruch 11, wobei die Steuereinheit weiter konfiguriert ist zum
Korrigieren des relativen Rotationswinkels auf der Grundlage eines Korrekturwinkels, der in den Skelettinformationen festgelegt ist.

## Revendications

1. Procédé de conversion mis en œuvre par un ordinateur, le procédé de conversion comprenant le traitement suivant :
l'acquisition d'informations de squelette dans lesquelles chacune d'une pluralité d'articulations incluses dans un corps humain et de coordonnées pour la pluralité d'articulations est définie, et d'informations de posture de référence dans lesquelles chacune d'une pluralité d'articulations incluses dans un corps humain et de coordonnées de référence pour la pluralité d'articulations est définie ;
la spécification d'une deuxième articulation qui correspond à un premier ensemble d'articulations dans les informations de posture de référence à partir de la pluralité d'articulations définies dans les informations de squelette ;
le calcul d'un angle de rotation relatif de coordonnées de référence de la première articulation à des coordonnées de la deuxième articulation ; et
la conversion des informations de squelette en données de structure hiérarchique en définissant l'angle de rotation relatif selon les données de structure hiérarchique.

2. Procédé de conversion selon la revendication 1, dans lequel, dans le traitement de calcul, des angles de rotation relatifs de coordonnées de référence d'une pluralité des premières articulations à des coordonnées d'une pluralité des deuxièmes articulations sont calculés par enregistrement rigide.

3. Procédé de conversion selon la revendication 2, dans lequel, dans le traitement de calcul, l'angle de rotation relatif est en outre calculé par la conversion d'un deuxième vecteur de la deuxième articulation sur la base d'un résultat de calcul de l'enregistrement rigide, et l'application, à une formule de rotation de Rodrigues, d'un angle formé entre un premier vecteur de la première articulation et le deuxième vecteur converti de la deuxième articulation avec une ligne normale entre le premier vecteur et le deuxième vecteur comme axe de rotation.

4. Procédé de conversion selon la revendication 3, comprenant en outre le traitement de correction de l'angle de rotation relatif sur la base d'un angle de correction défini dans les informations de squelette.

5. Programme de conversion pour amener un ordinateur à mettre en œuvre un traitement comprenant :
l'acquisition d'informations de squelette dans lesquelles chacune d'une pluralité d'articulations incluses dans un corps humain et de coordonnées pour la pluralité d'articulations est définie, et d'informations de posture de référence dans lesquelles chacune d'une pluralité d'articulations incluses dans un corps humain et de coordonnées de référence pour la pluralité d'articulations est définie ;
la spécification d'une deuxième articulation qui correspond à un premier ensemble d'articulations dans les informations de posture de référence à partir de la pluralité d'articulations définies dans les informations de squelette ;
le calcul d'un angle de rotation relatif de coordonnées de référence de la première articulation à des coordonnées de la deuxième articulation ; et
la conversion des informations de squelette en données de structure hiérarchique en définissant l'angle de rotation relatif aux données de structure hiérarchique.

6. Programme de conversion selon la revendication 5, dans lequel, dans le traitement de calcul, des angles de rotation relatifs de coordonnées de référence d'une pluralité des premières articulations à des coordonnées d'une pluralité des deuxièmes articulations sont calculés par enregistrement rigide.

7. Programme de conversion selon la revendication 6, dans lequel, dans le traitement de calcul, l'angle de rotation relatif est en outre calculé par la conversion d'un deuxième vecteur de la deuxième articulation sur la base d'un résultat de calcul de l'enregistrement rigide, et l'application, à une formule de rotation de Rodrigues, d'un angle formé entre un premier vecteur de la première articulation et le deuxième vecteur converti de la deuxième articulation avec une ligne normale entre le premier vecteur et le deuxième vecteur comme axe de rotation.

8. Programme de conversion selon la revendication 7, comprenant en outre le traitement de correction de l'angle de rotation relatif sur la base d'un angle de correction défini dans les informations de squelette.

9. Dispositif de conversion comprenant :
une unité de commande configurée pour
acquérir des informations de squelette dans lesquelles chacune d'une pluralité d'articulations incluses dans un corps humain et de coordonnées pour la pluralité d'articulations est définie, et d'informations de posture de référence dans lesquelles chacune d'une pluralité d'articulations incluses dans un corps humain et de coordonnées de référence pour la pluralité d'articulations est définie ;
spécifier une deuxième articulation qui correspond à un premier ensemble d'articulations dans les informations de posture de référence à partir de la pluralité d'articulations définies dans les informations de squelette ;
calculer un angle de rotation relatif de coordonnées de référence de la première articulation à des coordonnées de la deuxième articulation ; et
convertir les informations de squelette en données de structure hiérarchique en définissant l'angle de rotation relatif selon les données de structure hiérarchique.

10. Dispositif de conversion selon la revendication 9, dans lequel,
l'unité de commande calcule des angles de rotation relatifs de coordonnées de référence d'une pluralité des premières articulations à des coordonnées d'une pluralité des deuxièmes articulations par enregistrement rigide.

11. Dispositif de conversion selon la revendication 10, dans lequel,
l'unité de commande calcule en outre, en convertissant un deuxième vecteur de la deuxième articulation sur la base d'un résultat de calcul de l'enregistrement rigide, et en appliquant, à une formule de rotation de Rodrigues, un angle formé entre un premier vecteur de la première articulation et le deuxième vecteur converti de la deuxième articulation avec une ligne normale entre le premier vecteur et le deuxième vecteur comme axe de rotation.

12. Dispositif de conversion selon la revendication 11, l'unité de commande étant configurée en outre pour
corriger l'angle de rotation relatif sur la base d'un angle de correction défini dans les informations de squelette.
